# EUROPÄISCHE PATENTSCHRIFT

(11) **EP 3 880 525 B1**
(45) Veröffentlichungstag und Bekanntmachung des Hinweises auf die Patenterteilung: **01.02.2023**
(21) Anmeldenummer: 19762348.1
(22) Anmeldetag: 29.08.2019
(51) Int. Cl.: B60T 7/06, G05G 1/30, B60K 26/02

(54) **VORRICHTUNG ZUM BETÄTIGEN VON BREMSE UND GAS IN EINEM FAHRZEUG**
DEVICE FOR ACTUATING THE BRAKE AND ACCELERATOR IN A VEHICLE
DISPOSITIF D'ACTIONNEMENT DU FREIN ET DE L'ACCÉLÉRATEUR DANS UN VÉHICULE

(30) Priorität: 15.11.2018 DE 102018219487
(43) Veröffentlichungstag der Anmeldung: 22.09.2021
(73) Patentinhaber: Audi AG, 85045 Ingolstadt (DE)
(72) Erfinder: MICHAEL, Jörg, 85055 Ingolstadt (DE)
(74) Vertreter: Hofstetter, Schurack & Partner
(86) Internationale Anmeldenummer: PCT/EP2019/073079
(87) Internationale Veröffentlichungsnummer: WO 2020/098990

(56) Entgegenhaltungen:
- EP-A2- 2 840 000
- WO-A1-2019/048403
- FR-A1- 3 010 974
- JP-A- 2018 116 383
- US-A1- 2017 217 335

## Beschreibung

Die Erfindung betrifft eine Vorrichtung zum Betätigen von Bremse und Gas in einem Fahrzeug nach der im Oberbegriff von Anspruch 1 näher definierten Art.

Aus der älteren DE 10 2017 215 904 A1 und der gleichlautenden WO 2019/048403 A1 ist eine Vorrichtung der eingangs erwähnten Art bekannt.

Bei automatisierten Fahrzeugen gibt es zwei Fahrzustände. In einem Zustand bedient ein Fahrer Lenkrad, Gas- und Bremspedal in der herkömmlichen Weise und fährt damit das Fahrzeug voll aktiv. Daneben gibt es einen Fahrzustand, wobei das Fahrzeug durch Computer gesteuert und damit autonom bewegt wird.

Wenn der Fahrer sich beim autonomen Fahren entspannen und hierzu zum Beispiel eine Liegeposition auf seinem Sitz einnehmen möchte, ist ein Element erforderlich, auf das der Fahrer seine Beine auflegen kann.

Hierzu ist in der DE 10 2017 215 904 A1 vorgeschlagen, dass eine Betätigungseinheit, in der ein Bremsglied und ein Gasglied angeordnet sind, aus einer aktiven Fahrposition beim autonomen Fahren zur Beinauflage in eine wenigstens annähernd horizontale Position verstellbar ist. Dabei sind das Bremsglied und das Gasglied deaktiviert.

Aus der FR 3 010 974 A1 ist es bekannt, beim Fliegen die Pedale durch eine Beinauflageplatte abzudecken, auf der der Pilot seine Beine auflegen kann. Eine ähnliche Ausgestaltung ist in der JP 2018-116383 A offenbart.

Aus der FR 2 831 284 A1 und der DE 100 08 884 A1 sind weitere Betätigungsvorrichtungen für Bremse und Gas in einem Fahrzeug bekannt.

Es ist auch bekannt, ein Beinauflageelement in den Fahrersitz zu integrieren.

Nachteilig bei den bekannten Lösungen ist jedoch, dass beim autonomen Fahren die Fußauflageelemente einen erhöhten Aufwand darstellen und zusätzlichen Bauraum benötigen, der im Fußraumbereich des Fahrers nicht immer in erforderlichem Maße vorhanden ist.

Bekannt ist es weiterhin, anstelle einer mechanischen Kraftübertragung von Gaspedal und Bremspedal ein sogenanntes "drive-by-wire"-System zu verwenden. Dabei werden anstelle der Pedale zwei Druckplatten verwendet, wobei ein Wegsimulator die Betätigungsenergie des Fahrers auf die Druckplatten aufnimmt. Dieser Wegsimulator besitzt eine Pedalkraft und Pedalweg-Kennung. Die Ansteuerung von Funktionen erfolgt über elektrische Leitungen und Servomotoren bzw. elektromechanische Aktoren. Die beiden Druckplatten für Gas- und Bremsbetätigung sind dabei gemeinsam in einer Betätigungseinheit angeordnet.

Der vorliegenden Erfindung liegt daher die Aufgabe zugrunde, eine Vorrichtung zum Betätigen von Bremse und Gas in einem Fahrzeug zu schaffen, die in Verbindung mit dem "drive-by-wire"-System beim autonomen Fahren für den Fahrer auf einfache Weise und ohne besonderen zusätzlichen Bauraum eine Beinauflage ermöglicht.

Erfindungsgemäß wird diese Aufgabe durch die in Anspruch 1 genannten Merkmale gelöst.

Durch die erfindungsgemäße versenkbare Anordnung des Bremsgliedes und des Gasgliedes in der Betätigungseinheit 1 sind diese bei autonomer Fahrweise bündig mit der Oberfläche der Betätigungseinheit 1 und stellen damit keine Störkanten dar.

Durch diese Ausgestaltung entfällt eine zusätzliche bzw. separate Beinauflage, da die Betätigungseinheit beim autonomen Fahren als Auflage für die Beine des Fahrers benutzt wird.

Erfindungsgemäß können die Betätigungsglieder für Bremse und Gas in bekannter Weise als Druckplatten ausgebildet sein, die in der Betätigungseinheit angeordnet sind.

Nachfolgend sind Ausführungsbeispiele der Erfindung anhand der Zeichnung prinzipmäßig beschrieben.

Es zeigt:
- Fig. 1: ausschnittsweise ein Fahrzeug in einer aktiven Fahrposition;
- Fig. 2: ausschnittsweise das Fahrzeug nach Fig. 1 bei autonomer Fahrweise;
- Fig. 3: eine perspektivische Darstellung einer Betätigungseinheit zum Betätigen von Bremse und Gas in aktiver Fahrposition;
- Fig. 4: die Betätigungseinheit nach Fig. 3 in Ausbildung als Beinauflage bei autonomer Fahrweise;
- Fig. 5: ausschnittsweise eine Betätigungseinheit mit einem mechanischen Gelenkgetriebe; und
- Fig. 6: ausschnittsweise eine Betätigungseinheit mit Sensorgliedern als Bremsglied und Gasglied.

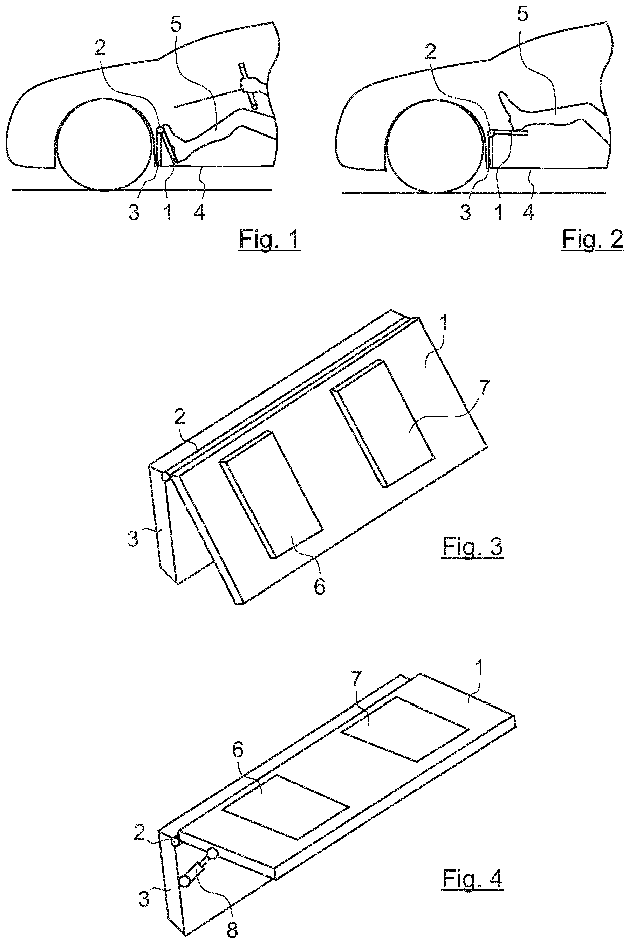

Gemäß Fig. 1 ist für den Fahrer zur Betätigung von Gas und Bremse eine Betätigungseinheit 1 vorgesehen, die über ein Drehgelenk 2 an einer Lagereinheit als Grundgehäuse 3 schwenkbar angeordnet ist. Die Lagereinheit 3 ist an einem Karosserieteil 4 des Fahrzeugs befestigt. Über die Beine 5 des Fahrers werden ein Bremsglied 6 und ein Gasglied 7 in Ausbildung als Druckplatten 6 und 7 (siehe Darstellungen in den Figuren 3 bis 5) im normalen Fahrbetrieb betätigt.

Die Fig. 2 zeigt die Betätigungseinheit 1 in einer Position als Beinauflage beim autonomen Fahren. Wie ersichtlich, ist die Betätigungseinheit 1 dabei in eine horizontale Lage geschwenkt, wodurch der Fahrer in einer Liegeposition seine Beine 5 auf die Betätigungseinheit 1 auflegen kann.

Aus den Figuren 3 und 4 ist in vergrößerter Darstellung die Ausgestaltung der Betätigungseinheit 1 ersichtlich. Aus der Oberfläche der Betätigungseinheit 1 ragen eine Druckplatte 6 für die Bremse als Bremsglied und eine Druckplatte 7 für Gas als Gasglied heraus. Die beiden Druckplatten 6 und 7 werden über nicht näher dargestellte Signalgeber in bekannter Weise bezüglich ihrer Funktionen gesteuert, wenn der Fahrer selbst fährt.

Die Fig. 4 zeigt eine Ausgestaltung der Betätigungseinheit 1 gemäß Fig. 3 in einer durch das Drehgelenk 2 in eine horizontal geschwenkten bzw. geklappten Lage zur Nutzung als Beinauflage. In dieser Position der Betätigungseinheit 1 werden die Funktionen der beiden Druckplatten 6 und 7 als Gas- und Bremssignalgeber über eine Software deaktiviert.

Die Betätigungseinheit 1 kann durch eine Aktivierung des Drehgelenks 2 über eine Gasfeder 8 (siehe Fig. 4) oder über elektrische Spindeln in die jeweils gewünschte Position gebracht werden.

Damit eine glatte Oberfläche der Betätigungseinheit 1 als Beinauflage in der autonomen Fahrweise gegeben ist, kann man die beiden Druckplatten 6 und 7 versenkbar in der Betätigungseinheit 1 anordnen, damit sie in dieser Position bündig mit der Oberfläche sind und keine Störkanten darstellen.

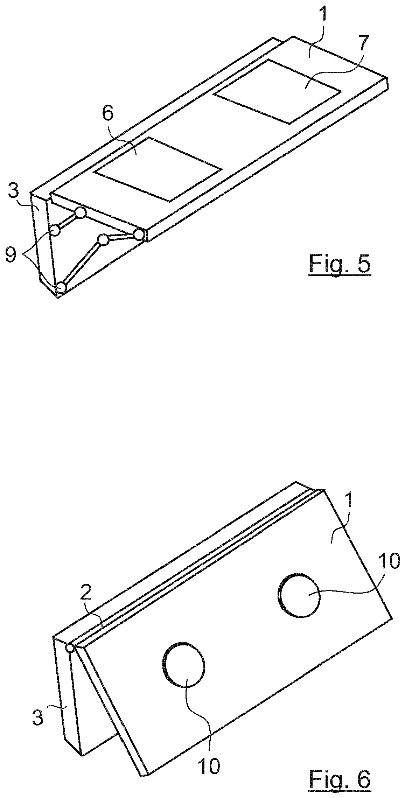

Fig. 5 zeigt ausschnittsweise die Verstellung der Betätigungseinheit 1 in Prinzipdarstellung über ein mechanisches Gelenkgetriebe 9, durch das bei einer Verschwenkung der Betätigungseinheit 1 aus der aktiven Position in eine horizontale Position für die Beinauflage gleichzeitig noch eine horizontale Verschiebung stattfindet.

Aus der Fig. 6 ist ersichtlich, dass anstelle von Druckplatten 6 und 7 Sensorglieder 10 in der Betätigungseinheit 1 als Brems- und Gasglieder vorgesehen sind, über die bei Aktivierung in normalem Fahrzustand und im autonomen Fahrzustand entsprechende Steuersignale zu deren Funktion weitergeben werden. Bei aktivem Fahrbetrieb stehen dabei die Sensorglieder 10, wie die Druckplatten 6 und 7, über die Oberfläche der Betätigungseinheit 1. Im autonomen Fahrbetrieb sind sie versenkt und mit der Oberfläche der Betätigungseinheit 1 bündig.

## Patentansprüche

1. Vorrichtung zum Betätigen von Bremse und Gas in einem Fahrzeug, wobei ein Bremsglied (6) und ein Gasglied (7) in einer Betätigungseinheit (1) angeordnet sind, wobei
die Betätigungseinheit (1) aus einer aktiven Fahrposition beim autonomen Fahren zur Beinauflage in eine wenigstens annähernd horizontale Position verstellbar ist und das Bremsglied (6) und das Gasglied (7) in dieser Position deaktiviert sind,
**dadurch gekennzeichnet, dass**
das Bremsglied (6) und das Gasglied (7) versenkbar in der Betätigungseinheit (1) angeordnet sind, wobei das Bremsglied (6) und das Gasglied (7), in der sich die Betätigungseinheit (1) in der wenigstens annähernd horizontalen Lage befindet, versenkbar derart angeordnet sind, dass sie wenigstens annähernd bündig mit der Oberfläche der Betätigungseinheit (1) sind.

2. Vorrichtung nach Anspruch 1,
**dadurch gekennzeichnet, dass**
das Bremsglied und das Gasglied als Druckplatten (6,7) ausgebildet sind.

3. Vorrichtung nach Anspruch 1 oder 2,
**dadurch gekennzeichnet, dass**
die Betätigungseinheit (1) über ein Gasfederglied (8) verstellbar ist.

4. Vorrichtung nach einem der Ansprüche 1 bis 3,
**dadurch gekennzeichnet, dass**
die Betätigungseinheit (1) durch eine elektrische Spindel verstellbar ist.

5. Vorrichtung nach einem der Ansprüche 1 bis 4,
**dadurch gekennzeichnet, dass**
die Betätigungseinheit (1) über ein Gelenkgetriebe (9) um eine horizontale Achse verschwenkbar und in horizontaler Richtung verschiebbar ist.

6. Vorrichtung nach einem der Ansprüche 1 bis 5,
**dadurch gekennzeichnet, dass**
die Betätigungseinheit (1) klappbar an einem Grundgehäuse (3) angeordnet ist, wobei das Grundgehäuse (3) als Lagereinheit ausgebildet ist, an der die Betätigungseinheit (1) über ein Drehgelenk angelenkt ist.

## Claims

1. A device for actuating brake and accelerator in a vehicle, wherein a brake member (6) and an accelerator member (7) are arranged in an actuation unit (1), wherein
the actuation unit (1) is adjustable from an active driving position into an at least approximately horizontal position in autonomous driving for leg support and the brake member (6) and the accelerator member (7) are deactivated in this position,
**characterized in that**
the brake member (6) and the accelerator member (7) are arranged retractable in the actuation unit (1), wherein the brake member (6) and the accelerator member (7), in which the actuation unit (1) is in the at least approximately horizontal position, are arranged retractable such that they are at least approximately flush with the surface of the actuation unit (1).

2. The device according to claim 1,
**characterized in that**
the brake member and the accelerator member are formed as press plates (6, 7).

3. The device according to claim 1 or 2,
**characterized in that**
the actuation unit (1) is adjustable via a gas spring member (8).

4. The device according to any one of claims 1 to 3,
**characterized in that**
the actuation unit (1) is adjustable by an electrical spindle.

5. The device according to any one of claims 1 to 4,
**characterized in that**
the actuation unit (1) is pivotable around a horizontal axis and displaceable in horizontal direction via a linkage mechanism (9).

6. The device according to any one of claims 1 to 5,
**characterized in that**
the actuation unit (1) is arranged foldable at a basic housing (3), wherein the basic housing (3) is formed as a bearing unit, to which the actuation unit (1) is hinged via a rotary joint.

## Revendications

1. Dispositif d'actionnement du frein et de l'accélérateur dans un véhicule, dans lequel un élément de frein (6) et un élément d'accélérateur (7) sont agencés dans une unité d'actionnement (1),
l'unité d'actionnement (1) pouvant passer d'une position de conduite active en conduite autonome pour former un repose-pieds à une position au moins sensiblement horizontale, et l'élément de frein (6) et l'élément d'accélérateur (7) étant désactivés dans cette position,
**caractérisé en ce que**
l'élément de frein (6) et l'élément d'accélérateur (7) sont agencés de manière à pouvoir être abaissés dans l'unité d'actionnement (1), l'élément de frein (6) et l'élément d'accélérateur (7), lorsque l'unité d'actionnement (1) est dans la position au moins sensiblement horizontale, étant agencés de manière à pouvoir être abaissés de telle sorte qu'ils sont au moins sensiblement affleurants avec la surface de l'unité de l'actionnement (1).

2. Dispositif selon la revendication 1,
**caractérisé en ce que**
l'élément de frein et l'élément d'accélérateur sont configurés comme des plaques à pression (6, 7).

3. Dispositif selon la revendication 1 ou 2,
**caractérisé en ce que**
l'unité d'actionnement (1) peut être déplacée par l'intermédiaire d'un élément à ressort à gaz (8).

4. Dispositif selon l'une des revendications 1 à 3,
**caractérisé en ce que**
l'unité d'actionnement (1) peut être déplacée par l'intermédiaire d'une tige électrique.

5. Dispositif selon l'une des revendications 1 à 4,
**caractérisé en ce que**
l'unité d'actionnement (1) peut pivoter autour d'un axe horizontal et peut être déplacée dans une direction horizontale par l'intermédiaire d'un mécanisme articulé (9).

6. Dispositif selon l'une des revendications 1 à 5,
**caractérisé en ce que**
l'unité d'actionnement (1) est agencée de manière à pouvoir être repliée sur un boîtier de base (3), le boîtier de base (3) étant configuré comme une unité de support sur laquelle l'unité d'actionnement (1) est articulée par l'intermédiaire d'une articulation tournante.
